# EUROPEAN PATENT APPLICATION

(11) **EP 4 301 008 A1**
(43) Date of publication of application: **03.01.2024**
(21) Application number: 23181345.2
(22) Date of filing: 26.06.2023
(51) Int. Cl.: H04W 4/40, H04W 4/38

(54) **COMMUNICATIONS WITHIN AN INTELLIGENT TRANSPORT SYSTEM TO IMPROVE PERCEPTION CONTROL**

(30) Priority: 30.06.2022 GB 202209618
(71) Applicant: CANON KABUSHIKI KAISHA, Tokyo 146-8501 (JP)
(72) Inventor: RUELLAN, Hervé, 35700 RENNES (FR); GALMICHE, Benjamin, 35000 RENNES (FR); KERGOURLAY, Gérald, 35250 CHEVAIGNE (FR); LE HOUEROU, Brice, 35690 ACIGNE (FR); MORVAN, Isabelle, 35135 CHANTEPIE (FR); NASSOR, Eric, 35235 THORIGNE-FOUILLARD (FR)
(74) Representative: Santarelli

(57) **Abstract**

According to some embodiments of the disclosure, it is provided a method of communication in an intelligent transport system, ITS, comprising at an ITS station, ITS-S, receiving a request to perform a perception measurement, the received request comprising a reference to at least one target object located in an area monitored by the ITS-S. In response, after having carried out a measurement of one or more attributes of the at least one referenced target object, an ITS message including items of information characterizing the one or more measured attributes of the at least one referenced target object is transmitted.

## Description

### FIELD OF THE DISCLOSURE

The present disclosure relates generally to Intelligent Transport Systems (ITS) and more specifically to Cooperative Intelligent Transport Systems (C-ITS).

### BACKGROUND OF THE DISCLOSURE

Cooperative Intelligent Transport Systems (C-ITS) is an emerging technology for future transportation management that aims at improving road safety, traffic efficiency, and driver experience.

Intelligent Transport Systems (ITS), as defined by the European Telecommunications Standards Institute (ETSI), include various types of communication such as:
- communications between vehicles (e.g., car-to-car), and
- communications between vehicles and stationary stations (e.g., car-to-infrastructure).

C-ITSs are not restricted to road transport as such. More generally, C-ITS may be defined as the use of information and communication technologies (ICT) for rail, water and air transport, including navigation systems. Such various types of C-ITS generally rely on radio services for communication and use dedicated technologies.

Such C-ITSs are subject to standards, specified for each country and/or territory where C-ITSs are implemented. Today, in Europe, the European Telecommunications Standards Institute is in charge of the elaboration of the specifications forming the standards to which C-ITSs are subjected.

Cooperation within C-ITSs is achieved by exchange of messages, referred as to ITS messages, between ITS stations (denoted ITS-Ss). The ITS-Ss may be vehicles, Road Side Units (RSUs), Vulnerable Road Users (VRUs) carrying an ITS equipment (for instance included in a smartphone, a GPS device, a smart watch, or in a cyclist equipment), or any other entities or infrastructure equipped with an ITS equipment, as well as central subsystems (back-end systems and traffic management centers).

As observed above, C-ITSs may support various types of communications, for instance between vehicles (vehicle-to-vehicle or "V2V"), referring to all kinds of road users, e.g., car-to-car, or between vehicles and stationary stations such as vehicle-to-infrastructure or "V2I", and infrastructure-to-vehicle or "I2V", e.g., car-to-infrastructure.

Such exchanges of messages may be performed via a wireless network, referred to as "V2X" (for "vehicle" to any kind of devices) networks, examples of which may include 3GPP LTE- Advanced Pro, 3GPP 5G, or IEEE 802.11p technology (3GPP, LTE, and IEEE are Registered Trade Marks).

Exemplary ITS messages include Collective Perception Messages (CPMs), Cooperative Awareness Messages (CAMs), and Decentralized Environmental Notification Messages (DENMs). An ITS-S sending an ITS message is named an "originating" ITS-S and an ITS-S receiving an ITS message is named a "receiving" ITS-S.

ITS messages are often broadcast and are generally not encrypted. However, for security reasons, they can be emitted only by authorized ITS stations. The authorization is implemented through a certificate, known as Authorization Ticket (AT) generated through an operational certificate chain, which defines authorization for one or more operational ITS services.

A Public Key Infrastructure (PKI) mechanism is implemented to provide anonymity to the ITS stations within an ITS communication system.

The ITS message and the corresponding authorization ticket are electronically signed, before being broadcast. The AT may be provided together with the broadcast ITS message, or may be provided before or after the broadcasting. The ITS message refers to the AT, for the receiving ITS station to be able to check the whole package.

The PKI mechanism alone cannot address all cyber threats. For instance, misbehaving entities having valid Authorization Tickets can still transmit tampered data.

It is recalled here that ETSI TS 103 324 (V0.0.29 of May 2022) standard defines the Collective Perception Service, that may be used by an ITS-S having an on-board sensor system to detect objects in its vicinity and to transmit, using broadcast CPMs, description information (e.g., dynamics such as a position and/or kinematic information) thereof. The CPMs are generally periodically sent with a period varying from 100 milliseconds to one second depending, for example, on the speed of the objects sensed by the originating ITS-S.

It is also to be noted that the EN 302 637-2 (V1.4.1 of April 2019) standard defines the Cooperative Awareness Basic Service, that may be used by an ITS-S to transmit, using broadcast CAMs, its ego-vehicle dynamics (e.g., its position and speed).

It is also to be noted that the EN 302 637-3 (V1.3.1 of April 2019) standard defines the Decentralized Environmental Notification Basic Service, that may be used by an originating ITS-S to send, using broadcast DENMs, notifications to other ITS-Ss, such as warnings or alerts. Such a message notifies of an event (e.g., a road hazard, driving environment information, traffic condition information, etc.) detected by the originating ITS-S.

As mentioned above, the Collective Perception Service allows a sensor-equipped ITS station to share, on a periodic basis, its perceived objects (e.g., vehicles or pedestrians) with other nearby ITS stations to improve their local environment perception using broadcast Collective Perception Messages (CPMs). For the sake of illustration, the on-board sensors may comprise cameras, radars, LiDAR, etc. However, the performance of these sensors may depend on environmental conditions. In particular, bad weather such as a heavy rain, fog, or snow may affect the performance of these sensors and therefore the relevance of information contained in a CPM.

In addition, since on-board sensors may also be used for providing advanced driver assistance systems (ADAS) such as adaptive cruise control, pedestrian detection, emergency braking, blind spot detection, park assist, etc., ADAS may become ineffective or may be degraded when weather conditions deteriorate and affect on-board sensors. While the ineffectiveness of some ADAS may simply result in annoyance for a driver (e.g., an ineffective park assist system only makes the parking task slightly more complex for the driver), the ineffectiveness of other ADAS may affect user's safety, in particular in the case where an ADAS becomes ineffective suddenly. For example, if an adaptive cruise control suddenly stops working, the driver may have to react very quickly to prevent a crash with a preceding vehicle.

As a consequence, anticipating local weather conditions that a vehicle may encounter and their expected impact on the quality of perception of the on-board sensors is of importance for the safety of ADAS. Therefore, there is a need to improve determination and sharing of weather conditions in ITSs.

### SUMMARY OF THE INVENTION

The present invention has been devised to address one or more of the foregoing concerns.

According to a first aspect of the disclosure, there is provided a method of communication in an intelligent transport system, ITS, comprising at an ITS station, ITS-S:
receiving a request to perform a perception measurement, the received request comprising a reference to at least one target object located in an area monitored by the ITS-S,
carrying out a measurement of one or more attributes of the at least one referenced target object,
transmitting an ITS message including items of information characterizing the one or more measured attributes of the at least one referenced target object.

Accordingly, the method of the disclosure makes it possible to determine and share easily weather conditions in an ITS.

According to some embodiments, the items of information comprise a maximum distance of perception of the at least one referenced target object.

Still according to some embodiments, the request further comprises at least one reference attribute of the at least one referenced target object, the method further comprising, prior to the transmitting, comparing the at least one reference attribute with a corresponding measured attribute of the at least one referenced target object.

Still according to some embodiments, the items of information comprise an indication of a difference between the at least one reference attribute and the corresponding measured attribute, an indication of at least one sensor used to carry out the measurement of the one or more attributes of the at least one referenced target object, and/or a reference to a mechanism used to correct measurements carried out by the at least one sensor.

Still according to some embodiments, the received request further comprises a reference to at least one sensor to be used for to carrying out the measurement of the one or more attributes of the at least one referenced target object.

Still according to some embodiments, the received request further comprises a reference to an area in which the one or more attributes of the at least one referenced target object are to be measured.

Still according to some embodiments, the request, denoted the first request, is received from a first originating ITS station, the method further comprising receiving a second request from a second originating ITS station, different from the first originating ITS station, the ITS message being transmitted to the second originating ITS station.

According to a second aspect of the disclosure, there is provided a method communication in an intelligent transport system, ITS, comprising:
transmitting a request to a receiving ITS station to perform a perception measurement, the transmitted request comprising a reference to at least one target object located in an area monitored by the receiving ITS-S,
in response to the transmitted request, receiving an ITS message including items of information characterizing measurements by the receiving ITS-S of one or more attributes of the at least one referenced target object.

Accordingly, the method of the disclosure makes it possible to determine and share easily weather conditions in an ITS.

According to some embodiments, the request is transmitted in response to identifying particular conditions in a vicinity of the receiving ITS station.

Still according to some embodiments, the items of information comprise a maximum distance of perception of the at least one referenced target object.

Still according to some embodiments, the request further comprises a reference to at least one sensor to be used for carrying out the measurement of the one or more attributes of the at least one referenced target object.

Still according to some embodiments, the request further comprises a reference to an area in which the one or more attributes of the at least one referenced target object are to be measured.

Still according to some embodiments, the request, denoted the first request, is transmitted from a first originating ITS station, the method further comprising transmitting a second request from a second originating ITS station, different from the first originating ITS station, the ITS message being received by the second originating ITS station.

Still according to some embodiments, the method further comprises analyzing the received ITS message and, in response to the analyzing, transmitting a warning ITS message to ITS stations in a vicinity of the receiving ITS station.

According to other aspects of the disclosure, there is provided a device configured for carrying out each of the steps of the method described above and a non-transitory computer-readable medium storing a program which, when executed by a microprocessor or computer system in an Intelligent Transport System station, ITS-S, causes the ITS-S to perform each step of the method described above.

These aspects of the disclosure have advantages similar to those mentioned above.

At least parts of the methods according to the disclosure may be computer implemented. Accordingly, the present disclosure may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present disclosure may take the form of a computer program product embodied in any tangible medium of expression having computer usable program code embodied in the medium.

Since the solutions of the present disclosure can be implemented in software, the solutions of the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g., a microwave or RF signal.

### BRIEF DESCRIPTION OF THE DRAWINGS

Further advantages of the present invention will become apparent to those skilled in the art upon examination of the drawings and detailed description. Embodiments of the invention will now be described, by way of example only, and with reference to the following drawings, in which:
**Figure 1** and **2** illustrates two examples of ITSs in which some embodiments of the present disclosure may be implemented;
**Figure 3** illustrates security mechanisms implemented in an ITS,
**Figure 4** illustrates the verification of a received ITS message based on a digital signature and an authorization ticket,
**Figure 5** illustrates an example of a flow of messages exchanged during a perception test request - response sequence, between a requesting ITS station (e.g., a stationary ITS station) and a measuring ITS station (e.g. a mobile ITS station), according to some embodiments of the disclosure,
**Figures 6** and **7** illustrate an example of the format of a perception test request message and of a perception test response message, respectively,
**Figures 8** and **9** illustrate an example of steps carried out in a requesting ITS station and in a measuring ITS station, respectively, according to some embodiments of the disclosure, and
**Figure 10** is a schematic representation of an example of a communication ITS-S device configured to implement some embodiments of the present disclosure, in whole or in part.

### DETAILED DESCRIPTION OF THE DISCLOSURE

According to some embodiments, perception capabilities of ITS stations are used to determine the impact of weather conditions on on-board sensors and thus, on the behavior of advanced driver assistance systems and to share such information with other road users equipped with ITS stations.

As mentioned above, ITS messages are generally not encrypted when exchanged on V2X communications. However, the integrity of ITS messages can be verified as a digital signature is provided by the sending ITS station. This signature is based on digital certificates owned by the originating station. For this purpose, each station receives one or more certificates through a Public Key Infrastructure (PKI). These certificates aim at ensuring that the originating ITS station has the privilege/authorization to transmit specific ITS messages. It is noted here that privacy is ensured within the PKI mechanism thanks to the two following principles:
- pseudonymity, which ensures that an ITS station may use a resource or service without disclosing its identity but can still be accountable for that use and
- unlinkability, which ensures that the greater the distance in time and space between two transmissions from a same device, the harder it is to determine that those two transmissions did in fact come from the same device.

To that end, the ITS stations are provisioned with a set of Pseudonym Certificates referred to as authorization tickets (AT) delivered by a certification authority. Thus, when exchanging ITS messages within the ITS network, each ITS message, made of an unencrypted message, is accompanied with a given AT and a digital signature that validate the authenticity of the transmitting ITS station and the integrity of the message. The anonymity of the transmitting ITS station is ensured because each AT is associated with a pseudonym, also called ITS identifier, used by the ITS station to communicate within the ITS.

Besides, ATs are regularly changed according to a temporal AT change strategy performed by each ITS station. Therefore, as the change of AT causes the change of the pseudonym and the digital signature used by the station, a regular change of AT over time makes the tracking by the receiving stations very difficult or impossible, in a classic operating mode of the ITS. Indeed, typically, the stations of the ITS (the vehicles or the vulnerable road users VRU) may share their current state (such as their position, speed, acceleration, etc.) using a Cooperative Awareness Message (CAM), for example as defined in the ETSI EN 302 637-2, (or VRU Awareness Messages (VAM), for example as defined in ETSI TR 103 300). Such messages are received by the receiving ITS stations and help them to determine their local environment.

The disclosure will now be described by means of specific non-limiting exemplary embodiments and by reference to the Figures.

### ITS system and ITS stations

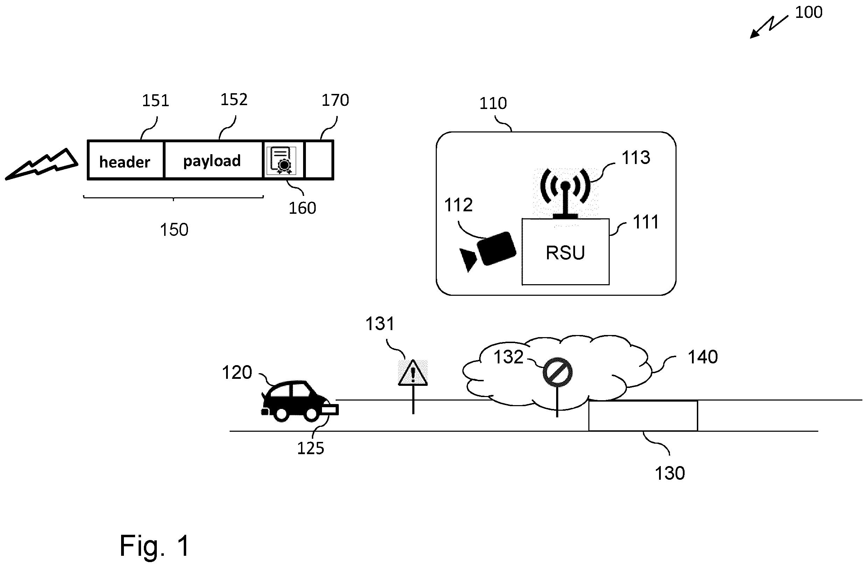

**Figure 1** illustrates a first example of ITS in which embodiments of the disclosure may be implemented. As illustrated, ITS 100 comprises a plurality of stationary and mobile ITS stations, in particular an ITS station of stationary road side entity 110 and a mobile ITS station (or on-board unit, OBU) associated with vehicle 120. An ITS station embedded within a vehicle is referred to as a 'vehicle ITS station' and an ITS station carried by a pedestrian or a cyclist is referred to as 'VRU (Vulnerable Road User) ITS station'. As illustrated, stationary road side entity 110 contains a road side unit (RSU) 111 also having a roadside ITS station.

Version V1.1.1 of the ETSI EN 302 665 specification defines a reference architecture of an ITS station.

An ITS station may embed or may be linked to one or more local sensors that may provide information about the ITS station position and/or motion or analyze or scan an area in the vicinity of the ITS station to detect objects.

For the sake of illustration, vehicle 120 embeds perception sensors 125, which may be of different types, for example they may comprise one or several cameras, radars, radios, or LIDARs. The output of the embedded perception sensors may be a list of perceived objects and corresponding description items of information.

Similarly, stationary road side entity 110 embeds a Roadside Surveillance Monitoring System (RSMS) including in particular a set of perception sensors, here video camera 112, communication means 113, and a Video Content Analytics (VCA) module (not represented). The VCA module may analyze video streams captured by the sensor or video camera in order to detect objects, referred to as perceived objects, to monitor the state of monitored areas, and to output lists of detected objects and/or of free spaces with corresponding description information.

Description information of a perceived object may include its dynamic state and properties (for instance a position, a speed, an acceleration, a class, a dimension, an age, etc.). Description information of a free space may include its state and its geometry (for instance a confidence level that the space is free or a state of the space as well as a description of the geometry of the free space).

Cooperation within ITS 100 may be achieved through exchange of ITS messages between the ITS stations: V2V (vehicle-to-vehicle) messages, V2I (vehicle-to-infrastructure) messages, and/or I2V (infrastructure-to-vehicle) messages. Various types of ITS messages exist to share information, alert, inform, and/or warn users and/or vehicles of ITS 100. As illustrated, an ITS message like ITS message 150 comprises a header 151 (including multiple fields) and a payload 152. Such an ITS message may be accompanied with a Pseudonym Certificate, for example Pseudonym Certificate 160, and a digital signature, for example digital signature 170.

As illustrated, road side unit 110 may monitor traffic on a part 130 of a road network, that comprises stationary elements, for example road signs 131 and 132, and mobile elements, for example vehicle 120.

Bad weather may affect a portion of the road network monitored by the RSU. For example, there may be fog 130 on the road. The RSU may have a general knowledge of this bad weather event, for example using weather forecasts or using reports of a weather station located in or near the monitored area. The RSU may also monitor more precisely the weather using its own sensors. However this precise information is limited to the perception range of its sensors.

According to some embodiments of the disclosure, a requiring ITS station such as RSU takes advantage of sensors of another ITS station, denoted the measuring ITS station, preferably a mobile ITS station, to obtain information about weather conditions. For example, RSU 111 may send an ITS message to the ITS station associated with vehicle 120 driving on the road network monitored by RSU 111 to ask for information about the quality of perception of its on-board sensors. For the sake of illustration, a RSU may transmit a list of road signs (e.g., road signs 130 and 131) of which it knows the position to the ITS station of the vehicles driving nearby. Upon reception of such a message, an ITS station may use its sensors to detect these road signs and analyze the detection quality. For example, perception of road sign 130 is not hindered by the fog, therefore the quality of detection of this road sign is normal, while perception of road sign 131 is hindered by the fog and the quality of detection of this road sign is lower than normal. Still according to some embodiments of the disclosure, a measuring ITS station such as an ITS station embedded within a vehicle, reports information about the perception quality of signaled elements to the requesting ITS station through one or several ITS messages. Possibly, the measuring ITS station may report quantitative indication of this quality of perception, for example by indicating the maximum perception distance for each road sign.

The requiring ITS station (e.g. RSU) may use these perception reports to generate weather information messages that it transmits, for example, to ITS stations of vehicles driving through the part of the road network it monitors. Possibly, in case of bad or harsh weather, these messages may take the form of warning messages.

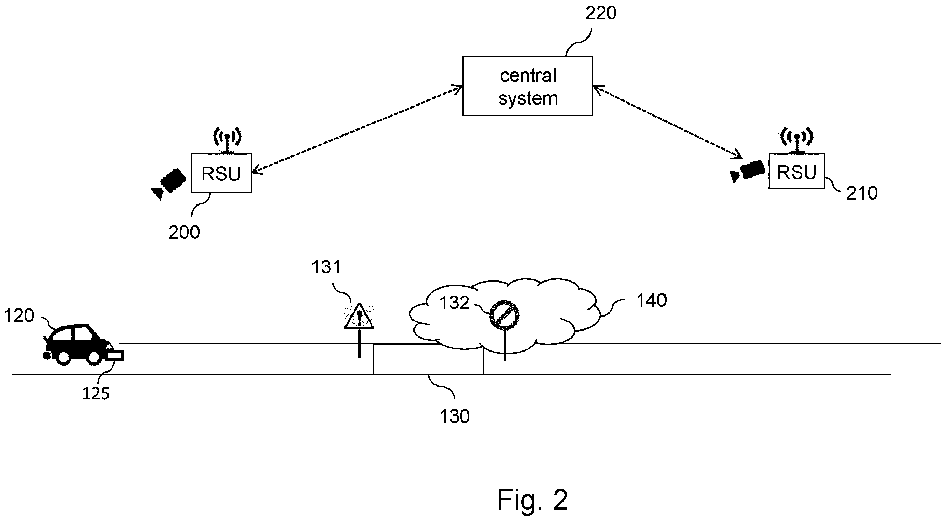

**Figure 2** illustrates a second example of ITS in which embodiments of the disclosure may be implemented. According to this example, a first RSU, referenced 200, sends a request through one or more ITS messages to the ITS station associated with vehicle 120, requiring information about the quality of perception of its sensors. Upon reception of such an ITS message, the ITS station embedded in vehicle 120 analyzes the perception of its sensors, for example sensors 125, possibly at different locations on the road network 140. After having carried out some measurements to determine how its sensors perceive their environment, the ITS station embedded in vehicle 120 transmits the results of this analysis to a second RSU, referenced 210, located elsewhere in the road network. The two RSUs (200 and 210) may communicate together, possibly through a central ITS system 220 to process this report and generate weather information messages.

Compared to the example of Figure 1, this configuration makes it possible for the disclosed mechanism to obtain perception information for larger areas of a road network, when the area cannot fall inside the communication range of a single RSU. According to this example, the ITS station of vehicle 120 may report information about its quality of perception for locations where it is not within a communication range of any of the RSUs.

Of course, this applies to any number of requiring ITS stations or RSUs, i.e. to more than two RSUs.

To secure V2X communications within ITS 100, a Public-Key-Infrastructure (PKI) (for example as defined in the version 1.1.1 of the ETSI TS 102 731 specification) may be used to enable a receiving station to make some verification to trust the originating ITS station. As described above, the PKI-based security may be implemented through the use of certificates delivered by a certification authority to the ITS stations. Accordingly, each ITS message comprises a non-encrypted message (e.g. ITS message 150) accompanied with a digital signature (e.g. digital signature 170) and a Pseudonym Certificate (e.g. a Pseudonym Certificate 160) that validate the authenticity of the originating ITS station and the integrity of the message, while keeping anonymity of the originating ITS station. The digital signature 170 may be computed (e.g. as the result of a hash function) from the corresponding ITS message 150 and the corresponding Pseudonym Certificate 160 (e.g. on a concatenation thereof). The Pseudonym Certificate 160 may be delivered by a certification authority. Such a certificate may be referred to as an authorization ticket. It ensures that the originating ITS station has the privileges and authorizations to transmit specific ITS messages. The authorization ticket may be verified by the receiving ITS station.

Basically, an ITS station is required to obtain specific credentials from dedicated certification authorities in order to access the ITS network 100 and make full use of the available ITS application, services, and capabilities, such as sending ITS messages. The certificate may depend on the capabilities of the ITS station (for instance its sensors or the Video Content Analytics (VCA) it can run) but also the role and the security level of the owner of the station. For example, only an ITS station with sensors with a sufficient quality of detection of a pedestrian and/or a cyclist may be authorized to send CPM messages containing VRU information. Still for the sake of illustration, the trust level associated with a certificate may be increased when it can be shown that the equipment used to generate and to transmit messages is regularly controlled against hacking.

### Use of certificates to exchange messages within an ITS

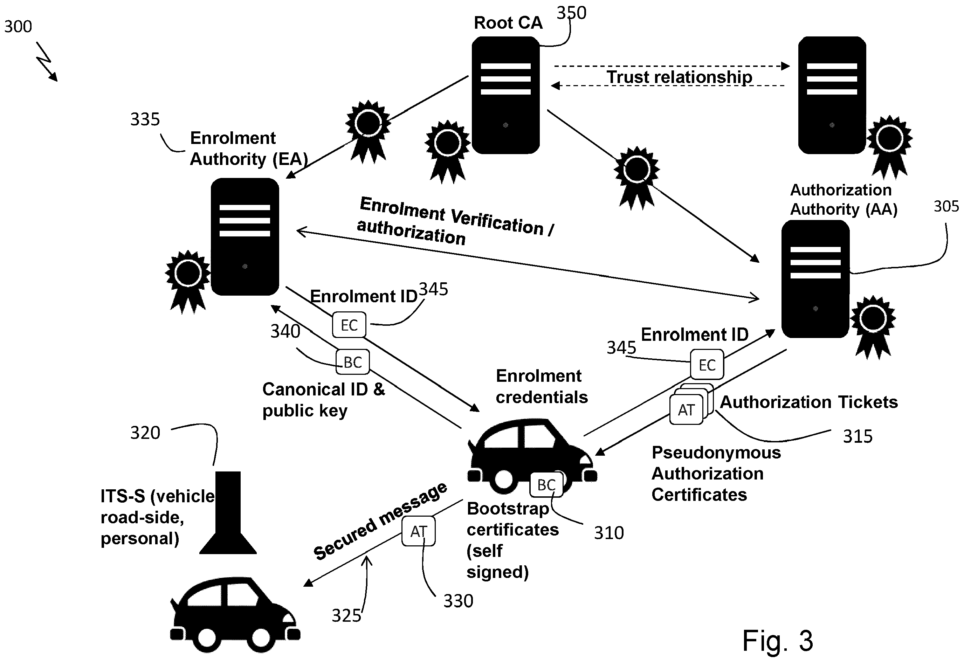

**Figure 3** illustrates an example of a PKI-based mechanism. The PKI-based security is implemented through the use of certificates delivered by a certification authority to the ITS stations.

As part of the ITS station manufacturing process, a set of information elements 340 associated with the identity of the ITS station is established within the ITS station itself and within a so-called Enrollment Authority (EA) 335, for example as defined in the version 1.2.1 of the ETSI TS 102 941 specification. The set of information elements 340 is then registered within the ITS station and the EA 335.

As an example, the set of information elements 340 may comprise:
- a canonical identifier, that is an identifier uniquely identifying the ITS station (i.e. the canonical identifier is equivalent to the ITS station identity), and
- a public/private key pair for cryptographic purpose based on a PKI mechanism.

Based on this set of information elements, Enrollment Authority 335 may generate an Enrollment Certificate 345 which contains a pseudonym provided to the ITS station during the enrollment process. The pseudonym is used for anonymity and is referred to as Enrollment Identity (Enrollment ID).

Next, after having enrolled with EA 335, the ITS station requests an Authorization Authority (AA) 305 for specific services and permission within the EA's domain and AA's Authorization context. In particular, AA 305 checks Enrollment Certificate 345 included in the request (more specifically, AA checks the Enrollment ID included in Enrollment Certificate 345). Then, if Enrollment Certificate 345 is suitable, AA 305 provides multiple Pseudonym Certificates referred to as Authorization Tickets (AT) 315. Each AT 315 includes a pseudonym of the ITS station to be used in V2X communication, to ensure its privacy when interacting within the ITS network.

From this security procedure, an ITS station 310 selects an AT among its available multiple ATs 315 for a given period before switching to another AT in order to prevent the linkability. The change of AT may be performed according to an AT change strategy.

The message 325 sent by the ITS station 310 together with the AT 330 corresponds to message 150 with AT 160 (the digital signature 170 is not shown in Figure 3).

Rather than accompanying the ITS message 325 with AT 330, ITS message 325 may contain a link to the AT 330 used, which is transmitted by other means, e.g. in a different message or using another transmission mean (prior to the ITS message or after the ITS message is sent, e.g. upon request from the receiving ITS station).

The pseudonym ITS identifier from the selected AT 330 may also be indicated in the header of the ITS message 325. In variants, an ID value linked to the ITS pseudonym may be indicated in the ITS message header, selected by the transmitting ITS station 310. Thus, the change of the value of the ID reflects the change of the selected AT 330 and the associated pseudonym.

An ITS station may thus have several valid certificates at the same time, all having different pseudonyms. The station can then select different certificates for different messages. Due to multiple pseudonyms, this may help avoiding station tracking and thus ensure privacy protection. In addition, as an AT contains a list of several authorizations, different ATs corresponding to different lists of authorizations may be used by a station depending on the particular context.

When receiving a message 325, the receiving ITS station 320, verifies the AT 330 in order to ensure that the transmitting ITS station 310 has the privileges and authorizations to transmit the specific ITS message 325.

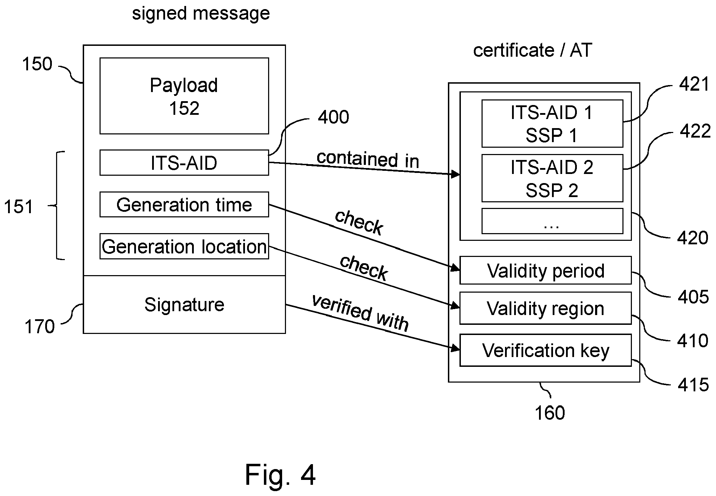

**Figure 4** illustrates verification of a signed message (i.e. a message accompanied with a digital signature).

The structure of the signed message 150 and its certificate AT 160 is described in Annex A.2 of the version 2.0.1 of the ETSI TS 103 097 specification. The structure of the certificate is a particular usage of the general signature defined in the specification IEEE 1609.2 and it is similar to the signature system defined in SAE J2945.

As illustrated, the signed message comprises the message 150 to be signed and the corresponding signature 170. The data to be signed comprise the payload 152 of the message and a header 151 comprising an ITS Application IDentifier (ITS-AID) 400 of the ITS application or service having generated the message and optionally other items of information such as the generation time and the generation location, which can be omitted, in particular if they can be deduced or inferred from the payload content. The signature 170 contains an identifier of the signer, i.e. the ITS-S ID (IDentifier) which is the pseudonym used by the originating ITS station, and an encrypted hashed value of the data being signed.

The pseudonym ITS-S ID allows the corresponding AT 160 to be retrieved by the receiving ITS-S. In other words, the pseudonym can be used as a reference to AT 160. For the sake of illustration, AT 160 may be requested by the receiving ITS station to an Authorization Authority or may be obtained from a secure memory if it has been received previously. As already described, the emitter (originating) station may have several identifiers or pseudonyms attributed by the Authorization Authority and thus, it may obtain as many certificates as identifiers or pseudonyms.

The certificate may specify an authorized period of time, an authorized location, and a list of authorized applications with specific permission.

For instance, AT may 160 contain a validity period 405, a validity region 410, and a verification key 415. The verification key allows verification of the correctness of the encrypted hash value included in the digital signature 170 (e.g. in digital signature 170). As illustrated, AT 160 also contains a list 420 of one or more application or service permission (e.g. application or service permission 421 and 422), each comprising an ITS Application IDentifier (e.g. ITS-AID 1 and ITS-AID2) defining the authorized ITS service and a Service Specific Permission (e.g. SSP1 and SSP2) defining permission for the corresponding authorized ITS service.

The ITS AID identifies an ITS service or application which uses some types of messages, that is authorized by AT 160. Currently in ETSI TS 102 965 V1.4.1, one ITS AID is defined per message type (for example CAM, DENM, CPM, and VAM), i.e. per operational ITS service. The allocation of ITS AID values to the ITS services may be defined by a predefined allocation scheme, as the one provided in ISO/TS 17419. The ITS AID may be encoded over 1 to 4 bytes. The shorter the ITS AID, the more critical the corresponding ITS service. For example, ITS AID equal to 36 (or 0x24) is assigned to the CA basic service, while ITS AID equal to 37 (or 0x25) is assigned to the DEN basic service

AT 160 thus provides the list of ITS messages that the ITS station is authorized to send.

As illustrated in Figure 4, digital signature 170 may be checked by using verification key 415, for example by computing again the result of a hash function applied to the ITS message 150 and AT 160 and by comparing the result with the hash value provided in the digital signature.

The time and location of ITS message 150 can also be checked with regard to the validity period 405 and validity region 410, respectively.

The authorization is also checked using ITS-AID 400 of the ITS message: the message can be processed only if ITS-AID 400 is present in the list 420 of permission. In the affirmative, an additional check of the content of the message payload 152 against the SSP associated with the ITS-AI D can be made to ensure e.g. the emitting ITS station has authorization to provide the payload data.

### Perception test request - response

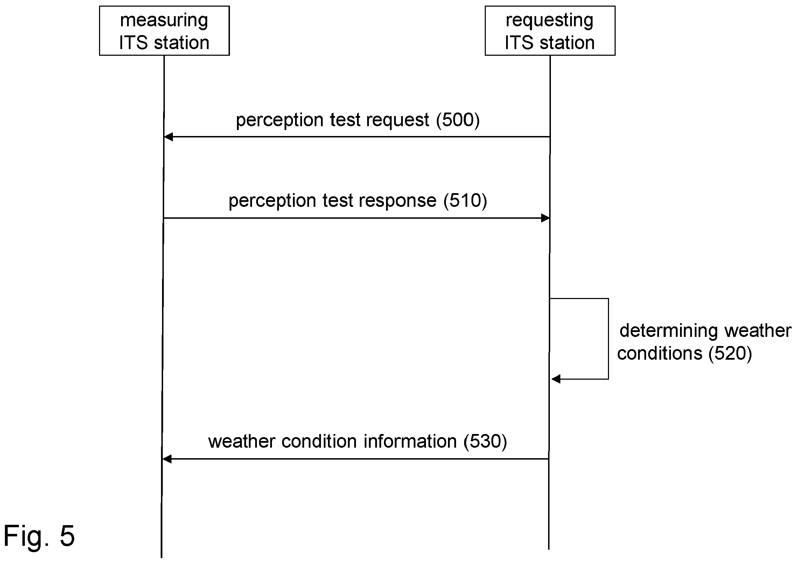

**Figure 5** illustrates an example of a flow of messages exchanged during a perception test request - response sequence, between a requesting ITS station, for example a stationary ITS station such as a road side unit (e.g., RSU 111), and a measuring ITS station, for example a mobile ITS station such as an ITS station associated with a vehicle (120), according to some embodiments of the disclosure. According to this example, the requesting ITS station sends a perception test request message (step 500) to a measuring ITS station, for example a mobile ITS station. This message requests the measuring ITS station to report its quality of perception for elements located in its area of perception or expected to be located in its area of perception in the near future. According to a particular embodiment, the perception test request message contains a set of one or more target objects that the measuring ITS station should use for testing and analyzing the quality of its perception. These target objects are preferably static objects whose presence is almost sure. This may include, for example, road signs, traffic lights, road surface markings, or even specific perception testing targets. Possibly, these target objects may also be vehicles or other road users detected by the requiring ITS station or known to the requiring ITS station through ITS messages or other means. These target objects may be located in one or more areas of the road network monitored by the requiring ITS station.

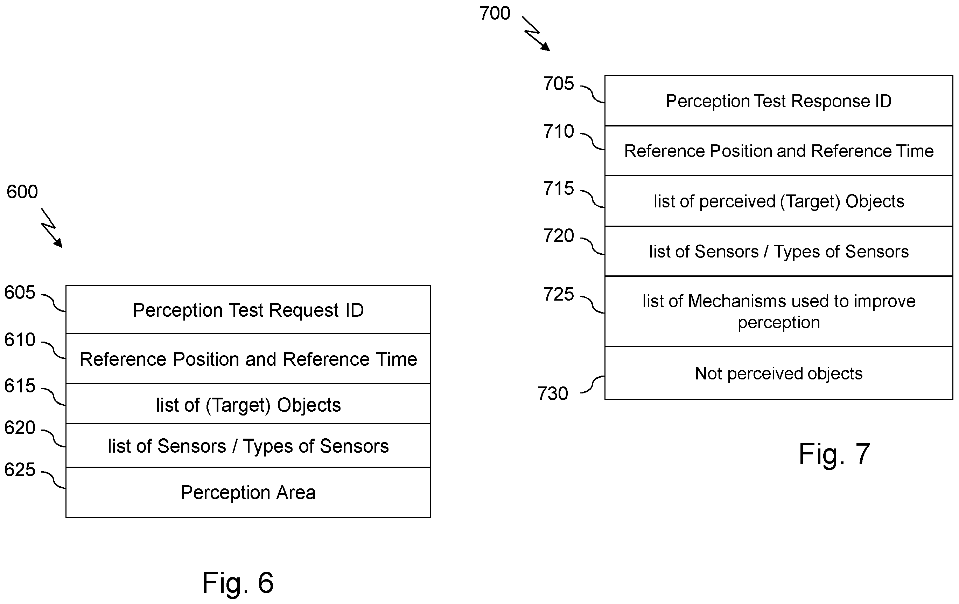

An example of a perception test request message is illustrated in Figure 6.

Next, after having analyzed the quality of its perception, the measuring ITS station (e.g., the mobile ITS station associated with vehicle 120) reports results of the analysis in a perception test response message (step 510). This response may indicate that it is a response to the perception test request message received at step 500. Preferably, it contains information about the perception quality for all or some of the target objects contained in the corresponding perception test request message.

An example of a perception test response message is illustrated in Figure 7.

Upon reception of the perception test response message, the requesting ITS station process the received message for determining the weather conditions in a least one area monitored by the requesting ITS station (step 520). This process may combine the perception test response, weather forecasts, data from weather stations, and/or previous perception test responses received either from the same measuring ITS station or from other measuring ITS stations. According to particular embodiments, the requesting ITS station forwards the received message so that the latter is processed in another processing system, for example in a central system.

Next, based on the weather conditions determined at step 520, the requesting ITS station may broadcast a weather condition information message (step 530). This message may be a generic weather information message. If bad weather conditions are occurring, this message may be a weather condition warning message or a generic warning message.

According to the example illustrated in Figure 2, a first perception test request message is sent by RSU 200. Preferably, this first perception test request message contains a list of target objects. The ITS station associated with vehicle 120 carries out an evaluation of its quality of perception using these target objects but does not send any response. Next, a second perception test request message is sent by RSU 210. Preferably, this second perception test request message does not contain any target objects, but contains information linking it to the first perception test request message. Upon receiving this second perception test request, the ITS station associated with vehicle 120 sends a perception test response message containing results of its perception quality evaluation.

It is noted that the weather determination process (step 520) may be realized by RSU 210, by RSU 200, by both RSUs 2°° and 210, or by central system 220. The resulting weather condition information may be broadcast (step 530) by both RSUs 210 and 200.

Possibly, the measuring ITS station may report the results of the analysis in several perception test response messages. This enables the measuring ITS station to send partial results of the analysis without waiting for the completion of the analysis.

### Perception test request - response messages

**Figure 6** illustrates an example of the format of a perception test request message. As illustrated, a perception test request message such as perception test request message 600 may comprise:
- a perception test request ID, referenced 605, which is a unique identifier of the request. It may comprise the concatenation of a test sequence number, with an identifier of the measuring ITS station (ITS ID) and a message request type,
- a reference position and a reference time of the message, referenced 610, which corresponds to the location of the requesting ITS station when sending the perception test request message and the time at which the message is generated,
- a list of target objects with their attributes, referenced 615, for example a list of m objects, for which the measuring ITS station is requested to provide information such as a location, the type of sensors used to perceive the object, etc.
- optionally, a list of sensors and/or of types of sensors to be used for estimating the perception quality, referenced 620, and/or
- optionally, an area with its attributes, referenced 625, in which the perception quality evaluation is to be carried out.

Each target object may be defined with some attributes similar to the ones defined in the Collective Perception Service Technical Report TR 103 562 (for example in its version V2.1.1 dated December 2019). The attributes of the target objects listed in a perception test request message may be the following (or some of the following):
- *objectID,* which is an identifier assigned to the target object,
- *time Of Measurement,* which is an indication of the time at which the object attributes were measured. It may correspond to the time difference between the time at which the object attributes were measured and the reference time set in the management header part. In some embodiments of the disclosure, the *time Of Measurement* can be directly set as an absolute time value,

- the distance defined by *xDistance, yDistance,* and *zDistance* (optional), which corresponds to the distance between the perceived object and the reference position defined in the management header in the *x*-, *y-, z*-direction of the ITS-S coordinate system, respectively, at the time of measurement. In some embodiments of the disclosure, the distance can be replaced by the geographical coordinates of the objects,
- the speed defined by *xSpeed, ySpeed* and *zSpeed* (optional), which corresponds to the speed of the perceived object in the detecting ITS-S's reference system in the *x*-, *y-, z*-direction, respectively, at the time of measurement,
- the dimension (optional) defined by *planarObjectDimension1, planarObjectDimension2,* and *verticalObjectDimension,* which represents the dimension of the target object, and/or
- *classification,* which provides the classification of the target object and which may be expanded compared to the classes of objects defined in the Collective Perception Service Technical Report TR 103 562 (for example in its version V2.1.1 dated December 2019) to cover other classes of objects such as road signs, traffic lights, road surface markings, etc.

As described above, the perception test request message may contain a list of one or more sensors or of types of sensors for which the quality of perception is to be reported by the measuring ITS station. This list of sensors or of types of sensors may be independent from the set of target objects. This list may also be linked to the set of target objects. For each target object the message may indicate one or more sensors or types of sensors that are to be evaluated with this target object. For each sensor or type of sensor, the message may list one or more target objects that are to be used for evaluating this sensor or type of sensor.

Optionally, the perception test request message may contain an area inside which the quality of perception of the measuring ITS station is to be evaluated. This area may also be computed from the positions of the target objects present in the perception test request message. The perception test request message may contain a time span during which the quality of perception of the measuring ITS station is to be evaluated. The area or the time span may be specific to a set of target objects or to a sub-list of sensors or of types of sensors.

It is noted that the perception test request message may be a specific message for requesting a perception test request or a generic test message, possibly signaling through a field that it is intended to be a perception test request. It may also be a CPM, possibly signaling through a field that it is intended to be a perception test request. It may also be a CPM, possibly signaling through some fields which objects are intended to be used as target objects for evaluating the perception quality. An object contained in such a CPM may be signaled as a normal CPM object, as an object only intended for evaluating the perception quality, or as an object intended to be used both as a normal CPM object and for evaluating the perception quality.

In response to a perception test request message such the one illustrated in Figure 6, a measuring ITS station provides a perception test response message (or perception test report) for the requested target objects, such as the one illustrated in Figure 7.

**Figure 7** illustrates an example of the format of a perception test response message. As illustrated, a perception test response message such as perception test request message 700 may comprise:
- a perception test response ID, referenced 705, which is a unique identifier of the response. It may comprise the concatenation of a test sequence number, with an identifier of the measuring ITS station (ITS ID) and a message response type,
- a reference position and a reference time of the message, referenced 710, which corresponds to the location of the measuring ITS station when sending the perception test response message and the time at which the message is sent,
- a list of perceived objects with their attributes, referenced 715, corresponding to the objects of the list received in the perception test request message (comprising target objects and possibly other objects) or to some objects of this list (e.g., in a case according to which all the objects have not been perceived by the measuring ITS station),
- a list of sensors, referenced 720, used for carrying out measurements in order to perceive objects listed in the received perception test request message,
- a list of mechanisms used to improve perception of objects, referenced 725. For the sake of illustration, this may include an indication of the use of a wiper for cleaning the sensor's window or of a water repellant coating on the sensor's window. This may also include a reference to an algorithm used for removing artifacts due to snowflakes in LiDAR data, and/or
- a list of not perceived objects, referenced 730, within the object list received in the perception test request message.

The perceived object attributes may be similar to the one provided in the perception test request message, the values of which corresponding to the one measured by the on-board sensor of the measuring ITS station, with some additional information such as which sensors were used to perceive this object and/or a confidence interval:
- *objectID,* which is the identifier corresponding to the reference object in the perception test request message,
- *sensorlDlist,* which comprises references to the sensor IDs used for perceive the object,
- *time Of Measurement,* which is an indication of the time at which the object attributes were measured (making it possible to detect the object) for the first time after having received the test request. It may correspond to the time difference between the time at which the object attributes were measured and the reference time set in the management header part. In some embodiments of the disclosure, the *time Of Measurement* can be directly set as an absolute time value,
- the distance defined by *xDistance, yDistance,* and *zDistance* (optional), which corresponds to the distance between the perceived object and the reference position defined in the management header the in the *x*-, *y-, z*-direction of the ITS-S coordinate system, respectively, at the time of measurement (i.e., at the first time after having received the test request). In some embodiments of the disclosure, the distance can be replaced by the geographical coordinates of the objects.
- the speed defined by *xSpeed, ySpeed* and *zSpeed* (optional), which corresponds to the speed of the perceived object in the detecting ITS-S's reference system in the *x*-, *y-,* z-direction, respectively, at the time of measurement,
- the dimension (optional) defined by *planarObjectDimension1*, *planarObjectDimension2,* and *verticalObjectDimension,* which represents the dimension of the perceived object,
- *classification,* which provides the classification of the perceived object, and which may be expanded compared to the classes of objects defined in the Collective Perception Service Technical Report TR 103 562 (for example in its version V2.1.1 dated December 2019) to cover other classes of objects such as road signs, traffic lights, road surface markings, etc.,
- a confidence interval,
- a maximum perception distance, which corresponds to the maximum distance between the perceived object and the position of the measuring ITS station for which the object was perceived, and/or
- a perception quality measure, which indicates the perception quality for this object as estimated by the measuring ITS station.

In some embodiments, the maximum perception distance or perception quality measure may include a confidence interval, indicating the confidence of the measuring ITS station for this maximum perception distance or this perception quality measure.

According to other embodiments, the maximum perception distance or the perception quality measure may be supplemented by one or more reasons explaining this maximum perception distance or this perception quality measure. For example, the measuring ITS station may indicate that an occlusion by another road user decreased the maximum perception distance.

For each sensor used by the measuring ITS station to perceive target objects, the perception test response message may contain items of information similar to the Sensor Information Container provided in CPMs as described, for example, in Collective Perception Service Technical Report TR 103 562:
- sensor ID, which is an identifier of the sensor,
- sensor type, which is the type of the sensor (e.g., LiDAR, radar, monovision, etc.), and/or
- detection area, which may be defined as a polygonal area with a list offset points from the reference position set in the management header.

As disclosed above and according to some embodiments, the target objects that are not perceived may be explicitly reported using at least some of the following items of information in the perception test response message:
- *objectID,* which is an identifier corresponding to the target object given in the perception test request message,
- *reason,* which provides, if it is available, the reason why the target object cannot be perceived, for example an occlusion or the characteristics of the sensors that are used to perceive the object (e.g., the sensors are not able to perceive this type of objects).

According to other embodiments, the target objects that have not been perceived by the measuring ITS station are omitted from the report, for example if they are deemed to be outside its normal perception range.

According to some embodiments, a target object may be reported several times in perception test response messages for reporting the quality of perception of the measuring ITS station (e.g., the ITS station associated with vehicle 120) at different distances from the target object or under different conditions (e.g., using different sensors).

According to some embodiments, the measuring ITS station (e.g., the ITS station associated with vehicle 120) may send several perception test response messages. For example, each time a new target object is perceived, a new report may be sent to transmit this item of information. As another example, once a predetermined duration has elapsed, a new report may be sent. Sending a new report may enable the measuring ITS station to refine the item of information it has sent about its quality of perception. It may also enable the measuring ITS station to report its quality of perception at different locations on the road network.

The message containing the perception test response may be a specific message for sending a perception test response or a generic test response, possibly signaling through a field that it is a perception test response message. It may also be a CPM, possibly signaling through a field that it is intended to be a perception test response message. It may also be a CPM, possibly signaling through some fields the objects with which information about the perception quality are associated with. An object contained in such a CPM may be signaled as a normal CPM object, as an object only intended to convey perception quality information, or as an object intended to be used both as a normal CPM object and for conveying perception quality information. The message containing the perception test response may also be a CAM or a DENM.

### Requesting and responding to perception tests

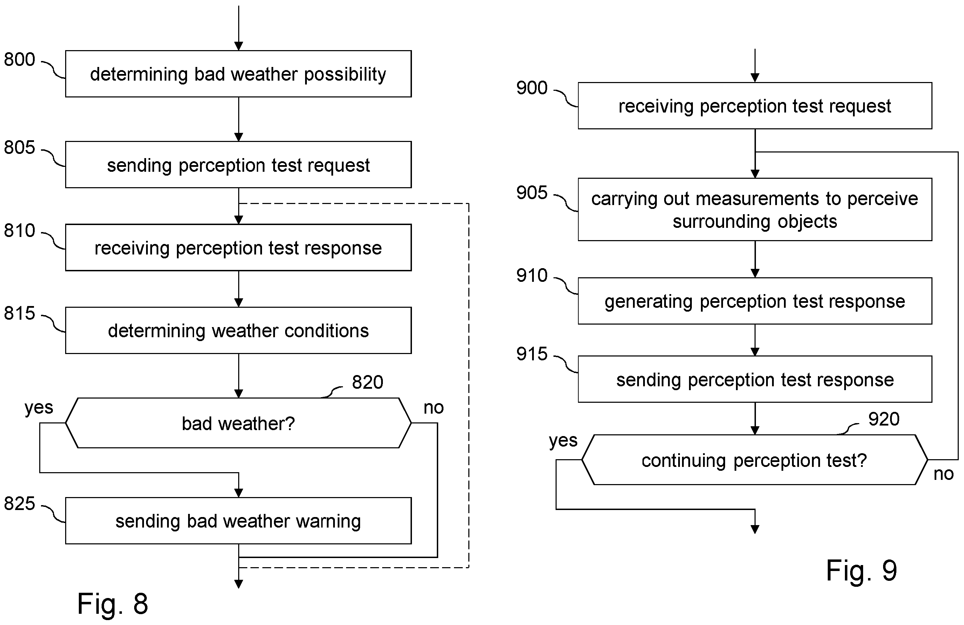

**Figure 8** illustrates an example of steps carried out in a requesting ITS station, for example in RSU 111 in Figure 1, according to some embodiments of the disclosure.

As illustrated, a first step is directed to identify a possible bad weather (step 800) that may affect the perception of the environment by road users in a given (broad) area. It may be based on weather forecasts, on reports from weather stations, or on other information.

Next, for example after having determined that the weather may affect the environment perception of road users in a given area, the requiring ITS station identifies at least one ITS station in the given area and sends a perception test request message to the identified ITS station (step 805), denoted the measuring ITS station (that is preferably a mobile ITS station). According to particular embodiments, the perception test request message is generated and transmitted by a requiring ITS station located in the area where the weather may affect the environment perception of road users, in the vicinity of the identified ITS station (according to its communication range). According to other embodiments, the perception test request message is generated by a remote ITS station, for example a central station, is transmitted to a stationary ITS station located in the area where the weather may affect the environment perception of road users, from which it is transmitted to the identified ITS station.

As described above, the perception test request message may include a list of target objects that the identified ITS station may use to evaluate the quality of its perception. This list of target objects may be extracted from a pre-defined list of target objects known to the ITS station generating the request, by selecting only the target objects in the list that should come into the perception range of the measuring ITS station. For example, if the vehicle is driving on a road, the ITS station generating the request may include in the perception test request message road signs located on this road in the direction in which the vehicle is moving. The ITS station generating the request may also select only the road signs that will be facing the vehicle as they will be easier to identify correctly. Still for the sake of illustration, the ITS station generating the request may also filter target objects depending on other conditions. For example, in case of snow, the ITS station generating the request may filter out all the target objects corresponding to road surface markings as there is a risk that they are hidden by the snow. The ITS station generating the request may also select only target objects that are easy to perceive and/or that can be perceived from a long distance under normal weather conditions. For example, it may filter out target objects that may be hidden by a building or a landmark as there is a risk that they can be perceived only at a short distance.

For each listed target object, the perception test request message may comprise information such as its position, its size, its orientation, and/or its type, for example that it is a stop sign. It may also include other useful characteristics of the target object, as for example its color, its reflectance, etc. The perception test request message may also include the types of sensors to use. Possibly, if the ITS station generating the request has knowledge of detailed information about the measuring ITS station to which the perception test request message is to be sent, it may indicate specific sensors to use. In addition, the perception test request message may include an area inside which the perception test is to be realized. It may also include a time span during which the perception test is to be realized.

Next, in response to the perception test request message, the requiring ITS station receives a corresponding perception test response message (step 810).

The received perception test response message is then analyzed to determine local weather conditions (step 815), possibly using other information as described by reference to step 520 in Figure 5.

Next, the determined local weather conditions are analyzed to determine whether they correspond to a bad weather (step 820), that is to say that they are used to check whether they can actually affect the environment perception of road users in the given area. This may be done by checking whether the perception test response message indicates that the quality of perception is lower than usual or not, i.e., lower than a given threshold.

As illustrated, if the local weather conditions correspond to bad weather conditions that may affect road users in the given area, the requiring ITS station may broadcast a weather information message. This weather information message may be a weather condition warning as described herein above.

It is noted that if the measuring ITS station sends several perception test response messages, steps 810 to 820 and possibly 825 are carried out for each perception test response message received (as illustrated with dotted line arrow). Possibly, several perception test response messages may be processed at once. This may be the case, for example, when several measuring ITS stations send perception test response messages in a short interval.

In the variant described by reference to Figure 2, step 800 may be carried out, for example, by RSU 200, by RSU 210, or by central system 220. Likewise, step 805 may be carried out by RSU 200 or by RSU 210, and steps 810, 815, 820, and/or 825 may be carried out by RSU 210.

**Figure 9** illustrates an example of steps carried out in a measuring ITS station, for example in the ITS station associated with vehicle 120 in Figure 1, according to some embodiments of the disclosure.

As illustrated, a first step is directed to receiving a perception test request message (step 900). The perception test request message may include a list of target objects that the measuring ITS station should use for testing and analyzing the quality of its perception. This perception test request message may also include a list of sensors or of types of sensors of which the measuring ITS station should test the perception quality.

According to a particular embodiment, the measuring ITS station may consider any perceived object as a target object if the perception test request message does not include a list of target objects. Likewise, if the perception test request message does not include a list of sensors or of types of sensors, the measuring ITS station may use any of or all its sensors to report the perception quality. It is noted that the measuring ITS station may limit its report to some of its sensors, for example not reporting the quality of its perception for sensors not adapted to the current driving conditions and/or for sensors not used for general driving tasks. For example, a night vision camera may not be considered during the daytime. As another example, the perception quality of a rearview camera may not be considered while driving on a highway.

Next, the measuring ITS station carries out measurements to detect and identify the surrounding target objects, using its sensors such as its cameras, LiDARs, radars, and/or other sensors (step 905), possibly as indicated in the corresponding perception test request message. This perception of surrounding objects may also rely on data processing operations to extract information from the sensor data. It is noted that such perception may be specific since it may be directed to objects that are generally not reported in ITS messages. For example, this perception step may include the detection of road signs, traffic lights, and/or road surface markings that are not reported in standard CPMs and therefore, that are not considered in the standard perception process for generating CPMs.

Possibly, several measurements may be made at different time instants and at different locations.

The measuring ITS station may also analyze these measurements for evaluating the perception quality for some or all target objects. This analysis may include evaluating the maximum perception distance for a target object. When this maximum perception distance is lower than what could be expected, for example based on the perception range of the sensor or sensors used, this analysis may include determining one or more reasons explaining this maximum perception distance. For example, it may determine than another road user was occluding the target object. It may also determine that a landmark occluded the target object. This analysis may also evaluate a confidence interval for this maximum perception distance, for example based on the confidence interval for the perception of the target object around this maximum perception distance.

The measuring ITS station may also analyze these measurements for evaluating a perception quality measure for some or all target objects. This perception quality measure may be based on the maximum perception distance for a target object. It may also be based on the variations in the perception of the target object, for example on the variations on the perception confidence interval for this target object. This perception quality measure may also be based on a comparison of the known characteristics of the target object and of its measured characteristics. For example, the perception quality measure may be based on a comparison of the known classification of the target object and of its measured classification.

During this perception step, the measuring ITS station may set a perception status to each target object indicated in the corresponding perception test request message. For example, such a perception status may be directed to a perception confidence level ranging from low to high. In a case according to which a target object is not perceived, the perception status may be directed to the reason why the target object is not perceived. In particular, the perception status may indicate whether the target object is occluded by another perceived object or is occluded by some part of the surrounding landscape such as a building, a tree, etc. The perception status may also be directed to the relative position of the target object with regard to the perception range of the measuring ITS station's sensors, as indicated in the perception test request message, for example if it is outside this perception range. The perception status may also be directed to the maximum perception distance of the target object, to the confidence interval for the maximum perception distance and/or to the reason or reasons explaining this maximum perception distance.

Next, based on the results obtained at step 905, a perception test response message is generated (step 910). It is noted that the measuring ITS station may use several criteria to determine whether a perceive target object (as identified in the corresponding perception test request message) is to be referenced in the perception test response message. Such criteria may take into account the sensors or the types of sensors for which the perception quality is to be evaluated. For example, a target object that is out of the perception range of a measuring ITS station or out of the perception range of the sensor or sensors to be used for perceiving a target object and that has not been detected may be ignored.

A target object that has been detected is preferably referenced in the perception test response message. However, if a target object has already been referenced in a previous perception test response message, it may be ignored. Still for the sake of illustration, if the perception quality associated with a target object has changed since a previous report, it may be referenced in a new perception test response message. Likewise, if a target object previously referenced has not been reported for a predetermined time, it may be referenced in a new perception test response message.

For a target object that is to be referenced in a perception test response message, the latter may comprise its position, its size, its orientation, its time of perception, its speed, its type, its distance to the measuring ITS station, the direction in which it is perceived from the measuring ITS station, its maximum perception distance, its maximum perception distance confidence interval, its maximum perception distance reason, its perception quality measure, its perception quality measure confidence interval, its perception quality measure reason, and/or any other useful characteristics. It may also comprise confidence information for some or all of these characteristics. For some characteristics, the perception test response may include a list of values, for example for the distance or for the direction of perception or for the confidence values. The perception test response may also include a reference to the corresponding target object included in the perception test request. The perception test response may also indicate which sensor or sensors were used to perceive the target object. It may also indicate countermeasures used for improving the perception in case of bad weather.

A target object that is in the perception range of the measuring ITS station or of the sensor or sensors to be used and that has not been detected may be referenced as not detected. For example, if it is determined in step 905 that the target object is occluded, this may be indicated in the perception test response message. Alternatively, the target object may be ignored.

Possibly, the measuring ITS station may include information about the sensor or sensors used to perceive a target object such as its type, its number of pixels (e.g., for a camera), its maximum range, its precision, the number of captured points (e.g., for a LiDAR), or any other characteristic of the sensor. It may also include references to countermeasures or enhancements used to improve the perception of the sensor or sensors such as a wiper in front of a camera and an algorithm for removing snow-related artifacts from point clouds.

Possibly, if the number of target objects to reference in the perception test response message is too large, the measuring ITS station may select which target objects are to be included in the perception test response message. For the sake of illustration, the measuring ITS station may select target objects that have not already been included in a perception test response message, target objects for which the quality of perception has changed significantly, or target objects that have not been referenced for a long period of time.

Possibly, if the number of target objects to reference in the perception test response message is too large, the measuring ITS station may generate several perception test response messages for reporting these target objects.

Still according to some embodiments, only some target objects among a list of target objects may be selected among target objects providing similar information about the perception quality. For example, if the perception of a road sign and of a traffic light located at a close distance from each other provide similar information regarding the perception quality, only one of them may be referenced.

In addition, selecting target objects to be referenced in a perception test response message may be based on an area signaled in the corresponding received perception test request message (i.e., the target objects outside this area may be ignored). For the sake of illustration, in the variant described by reference to Figure 2, the area in which the perception test is to be done, as signaled by RSU 200, may be different from the area signaled by RSU 210.

Next, once a perception test response message is generated, it is transmitted (step 915). Preferably, the perception test response message is sent as a response to the corresponding perception test request message (received at step 900).

Next, the measuring ITS station checks whether it should continue the perception test (step 920). The criteria for stopping the perception test may be based on whether all the target objects have been perceived by the measuring ITS station, on which target objects are on its forecasted path, on whether the measuring ITS station is still located in an area defined in the perception test request message, and/or on a test time window.

According to the variant illustrated in Figure 2, step 905 of perception of surrounding objects is realized once the perception test request from RSU 200 is received at step 900. However, steps 910 and 915 of generating and sending a perception test response message may be delayed until receiving the perception test request message from RSU 210. In another variant, step 900 is replaced by another step according to which the measuring ITS station determines that the weather conditions are bad and may impact the perception quality of its sensors and of other road users' sensors (this may be done as described by reference to step 800 in Figure 8).

Still according to some particular embodiments, a perception test request message is received directly from another road user, for example from an ITS station associated with another vehicle driving on the same road in the other direction. In such a case, the next step may be step 910, where the measuring ITS station generates a perception test response message from its previous perceptions of surrounding objects.

Still according to some particular embodiments, target objects to be used by a measuring ITS station to evaluate the perception quality are derived from ITS messages that are different from a perception test request message. For example, a measuring ITS station may use a CAMs received from other road users to generate target objects corresponding to these road users.

Still according to some particular embodiments, target objects to be used by a measuring ITS station to evaluate the perception quality are retrieved from a local map of the vehicle. For example, the measuring ITS station may retrieve traffic lights, road signs, and/or other landmarks along its forecasted path from its internal map and use these retrieved objects as target objects for evaluating the quality of its perception.

Still according to some particular embodiments, the measuring ITS station may aggregate results of its perception of surrounding objects before including them in a perception test response message. For example, it may only report the measured perception range of some of its sensors. As another example, it may report the measured perception range of a sensor along with a list of identifiers of target objects used for carrying out this measurement.

Still according to some particular embodiments, the measuring ITS station may report that a sensor or a type of sensor is not used because the weather conditions are outside its operation design domain.

### Example of hardware to carry out steps of the method of embodiments of the present disclosure

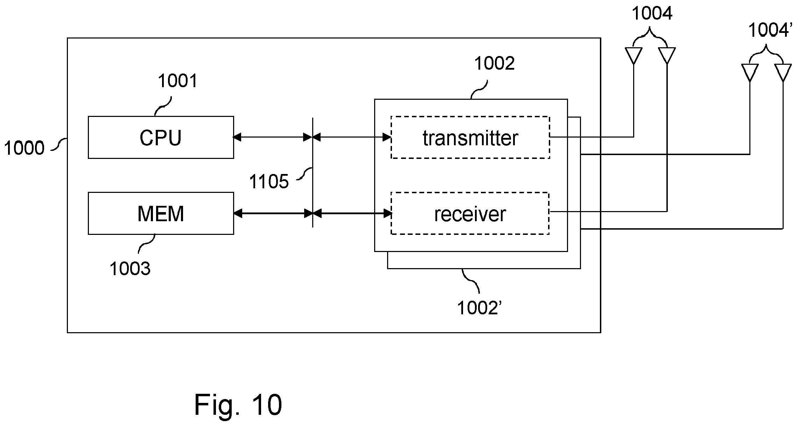

**Figure 10** schematically illustrates a communication device 1000 of an ITS, that may correspond to any of the vehicle or roadside ITS stations in Figure 1 or 2, configured to implement at least partially, one or more of the embodiments of the present disclosure. Communication device 1000 may be a device such as a micro-computer, a workstation, or a light portable device. Communication device 1000 may comprise a communication bus 1005 to which may be connected:
- a central processing unit 1001, such as a processor, denoted CPU;
- a memory 1003, denoted MEM, for storing an executable code of methods or steps of the methods according to some embodiments of the disclosure as well as the registers adapted to record variables and parameters necessary for implementing the methods; and
- at least two communication interfaces 1002 and 1002' connected to the V2X network, for example a communication network according to 3GPP LTE- Advanced Pro, 3GPP 5G, or IEEE 802.11p technology, via transmitting and receiving antennas 1004 and 1004', respectively.

Preferably the communication bus 1005 may provide communication and interoperability between the various elements included in the communication device 1000 or connected to it. The representation of the bus is not limiting and in particular the central processing unit is operable to communicate instructions to any element of the communication device 1000 directly or by means of another element of the communication device 1000.

The executable code may be stored in a memory that may either be read only, a hard disk or on a removable digital medium such as for example a disk. According to an optional variant, the executable code of the programs can be received by means of the communication network, via the interface 1002 or 1002', in order to be stored in the memory 1003 of the communication device 1000 before being executed.

In an embodiment, the device 1000 may be a programmable apparatus which uses software to implement embodiments of the invention. However, alternatively, embodiments of the present invention may be implemented, totally or in partially, in hardware (for example, in the form of an Application Specific Integrated Circuit or ASIC).

Although the present invention has been described herein above with reference to specific embodiments, the present invention is not limited to the specific embodiments, and modifications will be apparent to a skilled person in the art which lie within the scope of the present invention.

Many further modifications and variations will suggest themselves to those versed in the art upon referring to the foregoing illustrative embodiments, which are given by way of example only and which are not intended to limit the scope of the invention, that being determined solely by the appended claims. In particular, the different features from different embodiments may be interchanged, where appropriate.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

## Claims

1. A method of communication in an intelligent transport system, ITS, comprising at an ITS station, ITS-S:
receiving a request to perform a perception measurement, the received request comprising a reference to at least one target object located in an area monitored by the ITS-S,
carrying out a measurement of one or more attributes of the at least one referenced target object,
transmitting an ITS message including items of information characterizing the one or more measured attributes of the at least one referenced target object.

2. The method of claim 1, wherein the items of information comprise a maximum distance of perception of the at least one referenced target object.

3. The method of claim 1 or claim 2, wherein the request further comprises at least one reference attribute of the at least one referenced target object, the method further comprising, prior to the transmitting, comparing the at least one reference attribute with a corresponding measured attribute of the at least one referenced target object.

4. The method of claim 3, wherein the items of information comprise an indication of a difference between the at least one reference attribute and the corresponding measured attribute.

5. The method of any one of claims 1 to 4, wherein the items of information comprise an indication of at least one sensor used to carry out the measurement of the one or more attributes of the at least one referenced target object.

6. The method of claim 5, wherein the items of information comprise a reference to a mechanism used to correct measurements carried out by the at least one sensor.

7. The method of any one of claims 1 to 6, wherein the received request further comprises a reference to at least one sensor to be used for to carrying out the measurement of the one or more attributes of the at least one referenced target object.

8. The method of any one of claims 1 to 7, wherein the received request further comprises a reference to an area in which the one or more attributes of the at least one referenced target object are to be measured.

9. The method of any one of claims 1 to 8, wherein the request, denoted the first request, is received from a first originating ITS station, the method further comprising receiving a second request from a second originating ITS station, different from the first originating ITS station, the ITS message being transmitted to the second originating ITS station.

10. A method of communication in an intelligent transport system, ITS, comprising:
transmitting a request to a receiving ITS station to perform a perception measurement, the transmitted request comprising a reference to at least one target object located in an area monitored by the receiving ITS-S,
in response to the transmitted request, receiving an ITS message including items of information characterizing measurements by the receiving ITS-S of one or more attributes of the at least one referenced target object.

11. The method of claim 10, wherein the request is transmitted in response to identifying particular conditions in a vicinity of the receiving ITS station.

12. The method of claim 10 or claim 11, wherein the items of information comprise a maximum distance of perception of the at least one referenced target object.

13. The method of any one of claims 10 to 12, wherein the request further comprises a reference to at least one sensor to be used for carrying out the measurement of the one or more attributes of the at least one referenced target object.

14. The method of any one of claims 10 to 13, wherein the request further comprises a reference to an area in which the one or more attributes of the at least one referenced target object are to be measured.

15. The method of any one of claims 10 to 14, wherein the request, denoted the first request, is transmitted from a first originating ITS station, the method further comprising transmitting a second request from a second originating ITS station, different from the first originating ITS station, the ITS message being received by the second originating ITS station.

16. The method of any one of claims 10 to 15, further comprising analyzing the received ITS message and, in response to the analyzing, transmitting a warning ITS message to ITS stations in a vicinity of the receiving ITS station.

17. A computer program product for a programmable apparatus, the computer program product comprising a sequence of instructions for implementing each of the steps of the method according to any one of claims 1 to 16 when loaded into and executed by the programmable apparatus.

18. A non-transitory computer-readable storage medium storing instructions of a computer program for implementing each of the steps of the method according to any one of claims 1 to 16.

19. An Intelligent Transport System, ITS, station, ITS-S, comprising a processing unit configured for carrying out each of the steps of the method according to any one of claims 1 to 9.

20. An Intelligent Transport System, ITS, message to transmit information in an Intelligent Transport System, ITS, comprising a request to report quality of perception of objects within an area monitored by a receiving ITS station, the request further comprising at least one reference to a target object that quality of perception is to be reported.
